# EUROPEAN PATENT SPECIFICATION

(11) **EP 1 908 281 B1**
(45) Date of publication and mention of the grant of the patent: **03.07.2013**
(21) Application number: 05776497.9
(22) Date of filing: 18.07.2005
(51) Int. Cl.: H04N 5/76, H04N 21/433, H04N 21/4147, H04N 21/438, H04N 21/426, H04N 21/472

(54) **SYSTEM, METHOD AND APPARATUS FOR ENABLING CHANNEL SURFING WHILE BUFFERING AND RECORDING OF PREFERRED CHANNELS**
SYSTEM, VERFAHREN UND VORRICHTUNG ZUM ERMÖGLICHEN DES KANAL-SURFENS, WÄHREND BEVORZUGTE KANÄLE GEPUFFERT UND AUFGEZEICHNET WERDEN
SYSTEME, PROCEDE ET APPAREIL PERMETTANT DE NAVIGUER SUR DES CANAUX TOUT EN METTANT EN MEMOIRE TAMPON ET EN ENREGISTRANT DES CANAUX PREFERES

(43) Date of publication of application: 09.04.2008
(73) Proprietor: Thomson Licensing, 92130 Issy-les-Moulineaux (FR)
(72) Inventor: KENDALL, Scott, Allan, Westfield, Indiana 46074 (US)
(74) Representative: Rossmanith, Manfred
(86) International application number: PCT/US2005/025436
(87) International publication number: WO 2007/011356

(56) References cited:
- US-A1- 2002 009 285
- US-A1- 2005 044 570
- US-A1- 2005 073 613

## Description

### FIELD OF THE INVENTION

The present invention generally relates to video recording systems and, more particularly, to systems and methods which record preferred channels while surfing other channels.

### BACKGROUND OF THE INVENTION

Current personal video recorders (PVRs) buffer information during recording of video. During channel changes, a problem occurs when there is a loss of the buffer for the channel being recorded primarily as a result of the switching delay. To prevent this, a person could change inputs on the TV to check SURF outside of the PVR video loop (e.g., disconnect the buffering to surf live TV). Even if the buffer is maintained during channel changes, this still presents a problem in this scenario. If the person changes channels to see the weather, and the PRIME channel is delayed, the first person has no idea if the live PRIME is in commercial or at a critical point in the program. So changing channels is risky because switching programs will put a hole in the buffer of the first person's PRIME channel. An alternative is to try and catch up to live TV and time the user's channel changing during a commercial break. This may be very inconvenient and difficult.

Even if the viewing device had two tuners, the problem would still occur during the switching process. That is, if the channel were changed, the user would have no way of knowing what part of the previous channel programming would be lost while viewing the new channel. Therefore, a need exists for a reliable buffering system and method that provides a buffer without breaks or discontinuities in the content.

US 2002/0009285 discloses a personal versatile recorder and US 2005/0073613 discloses a method and apparatus for selecting among multiple tuners.

### SUMMARY OF THE INVENTION

A system, method and apparatus for surfing channels while preserving content on a preferred channel includes buffering a prime channel using a first tuner. Simultaneously changing viewing channels while buffering the prime channel such that the buffering of the prime channel includes a complete record of received content.

A system for permitting channel surfing while recording a designated channel includes a receiver having a first tuner and a second tuner for receiving content from a network. A buffer is associated with at least one of the tuners, and a switch is coupled to the tuners which disconnects the buffer from one of the tuners during channel changes to permit channel changes without buffering. A controller designates a channel to continue buffering using the first tuner while viewing of the channel changes occurs using the second tuner.

### BRIEF DESCRIPTION OF THE DRAWINGS

The teachings of the present invention can be readily understood by considering the following detailed description in conjunction with the accompanying drawings, in which:

FIG. 1 depicts a high level block diagram of a media recording system enabling the recording of a preferred channel while channel surfing in accordance with an embodiment of the present invention;

FIG. 2 depicts a high level block diagram of an embodiment of a controller/processor suitable for use in the receiver of the media recording system of FIG. 1; and

FIG. 3 depicts a block/flow diagram of a method for channel surfing which permits recording of preferred channels without buffer loss in accordance with one embodiment of the present invention.

It should be understood that the drawings are for purposes of illustrating the concepts of the invention and are not the only possible configuration for the invention. To facilitate understanding, identical reference numerals have been used, where possible, to designate identical elements that are common to the figures.

### DETAILED DESCRIPTION OF THE INVENTION

The present invention advantageously provides systems, methods and apparatus for enabling channel surfing while buffering one or more preferred channels. Although the present invention will be described primarily within the context of a video recording system such as digital video recorders (DVRs), TIVO™ recorders, personal video recorders (PVR) or similar recording systems, it will be appreciated by those skilled in the relevant art, informed by the teachings of the present invention that the concepts of the present invention may be applied to substantially any digital multimedia systems capable of program recording. In addition, the present invention is applicable to any recording method including recording data received via telephone connections, set top boxes, computer, satellite links, and the like. Furthermore, although the present invention is described in terms of receiving programming via cable or a satellite network, the concepts of the present invention may be extended to other wireless and wired network types from which programming is received.

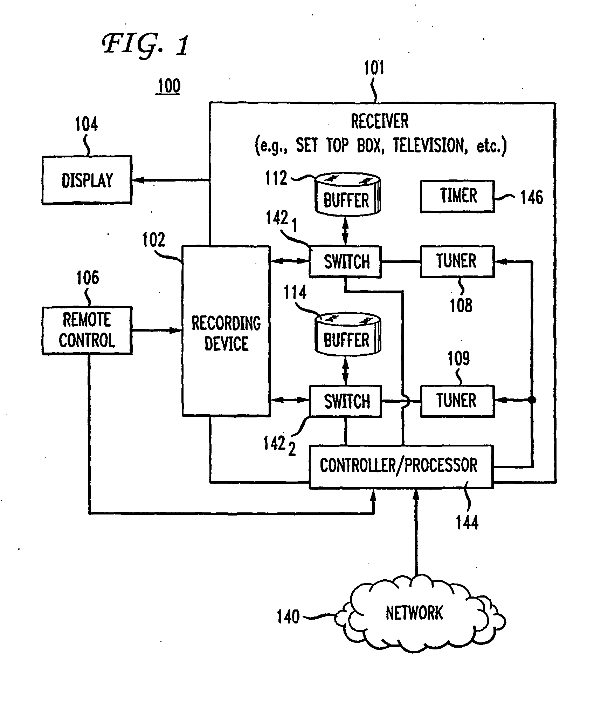

FIG. 1 depicts a high level block diagram of a media recording system enabling the recording of a preferred channel while channel surfing in accordance with an embodiment of the present invention. The media recording system 100 of FIG. 1 comprises a network 140 for providing media content (programs), a receiver 101 for receiving content from the network 140, a recording device 102 for recording media content (programming) received by the receiver 101 from the network 140 and a display device 104 for displaying the programming. In the media recording system 100 of FIG. 1, the receiver may include a television, a set top box, a satellite box, a modem (e.g., for DSL or the like) or any other receiving device. The network 140 of the media recording system 100 may include a cable, satellite, broadcast, DSL, or any other network which transmits video or audio content.

In the media recording system 100 of FIG. 1, the recording device 102 may include one or more of a personal video recorder (PVR), a digital video recorder (DVR), a VCR or DVD recorder, a TIVO™ recorder or any other recording device or combination of recording devices. The recording device 102 may be included in the receiver 101 or the recording device 102 may comprise a separate device external to the receiver 101 and connected thereto by cables or wirelessly depending on the device and setup. The media recording system 100 of FIG. 1 illustratively further includes a remote control device 106 which provides an interactive interface for controlling the receiver 101 or the recording device 102 depending on the configuration.

The receiver 101 of the media recording system 100 of FIG. 1 preferably comprises two or more tuners 108, 109 to enable concurrent surfing and buffering (and optionally recording) of various channels of received media content. The receiver 101 further illustratively comprises two buffers 112 and 114, however in alternate embodiments of the present invention, a single buffer may be employed and the functions described below for the two buffers 112 and 114 may be performed by a single buffer. The receiver 101 further illustratively comprises a timer 146 and two switches 142₁ and 142₂. The receiver 101 of the media recording system 100 of FIG. 1 further comprises a controller/processor 144. The controller/processor 144 of the receiver 101 controls the switches 142₁ and 142₂ and the tuners 108 and 109 for enabling the selective surfing and buffering of the present invention in response to, for example, user inputs and commands.

As previously described, in various alternate embodiments of the present invention the recording device 102 (and/or its functionality) may be included as a component of the receiver 101 and, as such, may have access and may make use of the other components of the receiver 101 as described above.

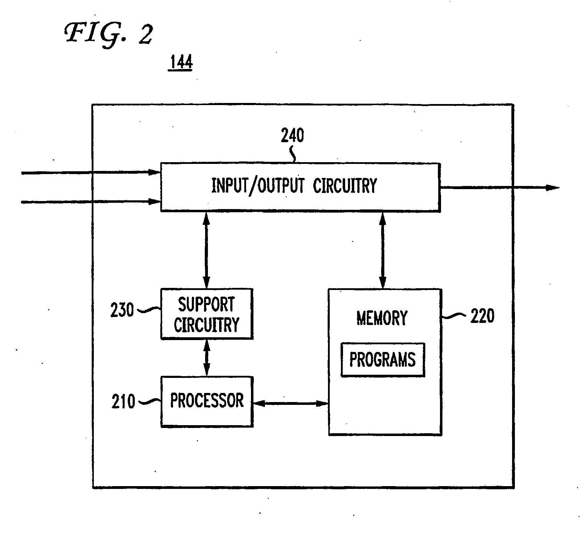

FIG. 2 depicts a high level block diagram of an embodiment of a controller/processor 144 suitable for use in the receiver 101 of the media recording system 100 of FIG. 1. The controller/processor 144 of FIG. 2 comprises a processor 210 as well as a memory 220 for storing information, control programs, algorithms and the like. The processor 210 cooperates with conventional support circuitry 230 such as power supplies, clock circuits, cache memory and the like as well as circuits that assist in executing the software routines stored in the memory 220. As such, it is contemplated that some of the process steps discussed herein as software processes may be implemented within hardware, for example, as circuitry that cooperates with the processor 210 to perform various steps. The controller/processor 144 also contains input-output circuitry 240 that forms an interface between the various functional elements communicating with the controller/processor 144.

Although the controller/processor 144 of FIG. 2 is depicted as a general purpose computer that is programmed to perform various control functions in accordance with the present invention, the invention can be implemented in hardware, for example, as an application specified integrated circuit (ASIC). As such, the process steps described herein are intended to be broadly interpreted as being equivalently performed by software, hardware, or a combination thereof.

As previously described, the present invention permits the changing of channels while maintaining a buffer to continue buffering a previous channel. The buffered programming may also be recorded. For this to work efficiently, the receiver device 101 includes two or more tuners 108, 109 such that one tuned signal can be buffered while another is used to surf channels (preferably unbuffered). In one embodiment, the switches 142₁ and 142₂ are employed to disconnect the signals output from the tuners 108 and 109. The switches 142₁ and 142₂ are controlled by the controller/processor 144 which ultimately controls the buffering (buffers 112 or 114). During operation, if a user wishes to surf in an efficient way, disconnecting the buffering permits rapid live TV surfing. It is preferable that the surfed channels are un-buffered, although they may be buffered in accordance with a user's preferences.

More specifically, in the media recording system 100 of FIG. 1 the receiver 101 implements the first tuner 108 to select a first desired channel, considered by the inventors as a "PRIME" channel, of the programming channels being transmitted by the network 140 for viewing on the display device 104. Subsequently, if it is desired during viewing of the PRIME channel to surf other programming channels, considered by the inventors as "SURF" channels, provided to the receiver 101 by the network 140, a buffering and recording method in accordance with the present invention is initiated for the programming of the PRIME channel such that no programming information is lost while surfing the other programming channels available from the network 140. Although throughout the teachings herein, the concepts of the present invention are described as buffering and recording a first programming channel while surfing at least a second programming channel, in various alternate embodiments of the present invention, a first programming channel is only buffered while other programming channels are surfed. As such it should be appreciated by those skilled in the art informed by the teachings of the present invention that a first programming channel can be buffered or buffered and recorded while other programming channels are surfed in accordance with the concepts of the present invention.

For example, if a user is watching a football game on the PRIME channel and during the game he wishes to check, for example, the weather channel, the programming information on the PRIME channel being received by the first tuner 108 is able to be buffered in the first buffer 112 and recorded by the recording device 102 while the weather channel (i.e., the SURF channel) is received by the second tuner 109 and displayed on the display device 104. As such, when the user returns to watching the football game, no program information is lost for the PRIME channel, however, the user continues to watch the PRIME channel in a time-shifted manner.

In one embodiment of the present invention, upon selection of a SURF channel (i.e., changing the programming channel away from the PRIME channel) while watching a PRIME channel, a user is prompted on the display 104 whether or not the user wishes to begin buffering and recording the PRIME channel programming. If the user chooses to buffer and record the PRIME channel programming, the invention follows the method described above. In alternate embodiments of the present invention, however, immediately upon changing the programming channel away from a selected PRIME channel, the PRIME channel programming is immediately buffered and recorded as described above.

Optionally, and in accordance with the present invention, if a SURF channel is watched for longer than a predetermined time as determined by, for example the timer 146, the programming on the extendedly watched SURF channel may instead be selected to be buffered and recorded upon changing the programming channel away from the extendedly watched SURF channel. For example, if a user is watching a football game on the PRIME channel and during the game he wishes to surf other available programming channels from the network 140, the programming information on the PRIME channel being received by the first tuner 108 is able to be buffered in the first buffer 112 and recorded by the recording device 102 as described above, while the user surfs other programming channels received by the second tuner 109 and displayed on the display device 104. If while surfing, however, the user finds a programming channel (i.e., a SURF channel) that he prefers to watch, for example a baseball game, and remains on the SURF channel longer than a predetermined period of time as determined by, for example the timer 146 of the receiver 101, the programming on the extendedly watched and now preferred SURF channel may instead be selected to be buffered and recorded upon changing the programming channel away from the extendedly watched SURF channel. That is, the two switches 142₁ and 142₂ of the receiver 101 of the media recording system 100 are used to determine which of the programming content from which of the tuners 108, 109 is to be buffered and recorded. For example, if while watching the now preferred baseball game (SURF programming) the user wishes to check, for example, the weather channel, the programming information on the now preferred SURF channel being received by the second tuner 109 is able to be buffered in the second buffer 114 and recorded by the recording device 102 while the weather channel (i.e., the SURF channel) is received by a subsequent tuner (not shown) or alternatively the first tuner 108 and displayed on the display device 104. In an embodiment of the present invention where the first tuner 108 is subsequently used as the SURF tuner, the previously selected PRIME channel programming information will no longer be received by the tuner 108, which is now being used to surf the available programming channels provided by the network 140. In any event, when the user returns to watching the baseball game (i.e., the now preferred SURF channel which can now be considered the new PRIME channel), no program information is lost for the baseball game, however, the user continues to watch the baseball game in a time-shifted manner. In such embodiments of the invention, the previously buffered programming of the PRIME channel may be optionally recorded by the recording device before beginning to buffer the programming of the now preferred SURF channel.

In the above described embodiment of the present invention, upon changing the programming channel away from the now preferred SURF channel which was viewed for longer than a predetermined period of time as described above, a user is prompted on the display 104 whether or not the user wishes to begin buffering and recording the now preferred SURF channel programming. If the user chooses to buffer and record the now preferred SURF channel programming, the invention follows the method described above for recording the now preferred SURF channel programming while surfing other available programming channels provided by the network 140. Furthermore and as previously described, a user may also have the option to record the previously buffered programming of the PRIME channel before beginning to buffer then now preferred SURF channel programming. In alternate embodiments of the present invention, however, immediately upon changing the programming channel away from a newly preferred SURF channel, the newly preferred SURF channel programming is immediately buffered and recorded as described above. In addition and as described above, a receiver 101 or recording device 102 in accordance with the present invention may comprise more than two tuners for selecting several programming channels provided by the network 140 and for enabling a user to switch between the selected and tuned programming channels. Although in the media recording system 100 of FIG. 1, the receiver 101 is depicted as comprising two switches 142₁ and 142₂ and two buffers 108 and 109, in alternate embodiments of the present invention, a receiver in accordance with the present invention may comprise a single switch and a single buffer or any combination of switches and buffers for performing the above described functionality of the present invention.

In an alternate embodiment of the present invention, a previously paused, buffered and recorded PRIME program channel is continued to be buffered and recorded during the surfing of other programming channels provided by the network 140. More specifically, in the media recording system 100 of FIG. 1 the receiver 101 implements the first tuner 108 to select a first channel (PRIME channel) of the programming channels being transmitted by the network 140 for viewing on the display device 104. If during viewing of the PRIME channel, the programming is paused, the PRIME channel programming is buffered in the buffer 112 and recorded by the recording device 102. Upon resuming the PRIME channel viewing (i.e., the pause is resumed) the PRIME channel programming is continued to be viewed without losing any programming, however, the PRIME channel programming will continue to be viewed in a delayed (e.g., time-shifted) manner. Subsequently, if it is desired during the delayed viewing of the PRIME channel to surf other programming channels provided to the receiver 101 by the network 140, a buffering and recording routine in accordance with the present invention is initiated for the programming of the PRIME channel such that no programming information is lost while surfing the other programming channels available from the network 140. For example, if a user is watching a time-shifted football game on the PRIME channel and during the game he wishes to check, for example, the weather channel, the programming information on the PRIME channel being received by the first tuner 108 is continued to be buffered in the first buffer 112 and recorded by the recording device 102 while the weather channel (i.e., the SURF channel) is received by the second tuner 109 and displayed on the display device 104. As such, when the user returns to watching the time-shifted football game, no program information is lost for the PRIME channel and the user continues to watch the PRIME channel in a time-shifted manner.

Similarly as described above, in one embodiment of the present invention, upon selection of a SURF channel (i.e., changing the programming channel away from the time-shifted PRIME channel) while watching a time-shifted PRIME channel, a user is prompted on the display 104 whether or not the user wishes to continue buffering and recording the PRIME channel programming. If the user chooses to buffer and record the PRIME channel programming, the invention follows the method as described above. In alternate embodiments of the present invention, however, upon changing the programming channel away from a selected time-shifted PRIME channel, the PRIME channel programming is continued to be buffered and recorded as described above.

Similarly and as described above, optionally if a SURF channel is watched for longer than a predetermined time as determined by, for example the timer 146, the programming on the extendedly watched SURF channel may instead be selected to be buffered and recorded upon changing the programming channel away from the extendedly watched SURF channel. For example, if a user is watching a football game on the time-shifted PRIME channel as described above and during the game he wishes to surf other available programming channels from the network 140, the time-shifted programming information on the PRIME channel being received by the first tuner 108 is continued to be buffered in the first buffer 112 and recorded by the recording device 102 as described above, while the user surfs other programming channels received by the second tuner 109 and displayed on the display device 104. If while surfing, however, the user finds a programming channel (i.e., a SURF channel) that he prefers to watch, for example a baseball game, and remains on the SURF channel longer than a predetermined period of time as determined by, for example the timer 146 of the receiver 101, the programming on the extendedly watched and now preferred SURF channel may instead be selected to be buffered and recorded upon changing the programming channel away from the extendedly watched SURF channel. That is, the two switches 142₁ and 142₂ of the receiver 101 of the media recording system 100 are used to determine which of the programming content from which of the tuners 108, 109 is to be buffered and recorded. For example, if while watching the now preferred baseball game (SURF programming) the user wishes to check, for example, the weather channel, the programming information on the now preferred SURF channel being received by the second tuner 109 is able to be buffered in the second buffer 114 and recorded by the recording device 102 while the weather channel (i.e., the SURF channel) is received by a subsequent tuner (not shown) or alternatively the first tuner 108 and displayed on the display device 104. In an embodiment of the present invention where the first tuner 108 is subsequently used as the SURF tuner, the previously selected PRIME channel programming information will no longer be received by the tuner 108, which is now being used to surf the available programming channels provided by the network 140. In any event, when the user returns to watching the baseball game (i.e., the now preferred SURF channel which can now be considered the new PRIME channel), no program information is lost for the baseball game, however, the user continues to watch the baseball game in a time-shifted manner.

Even further and in accordance with the present invention, if a PRIME programming channel is being buffered while surfing other channels, an indication may be given to a user when the buffer is nearing its capacity that the buffer is nearly full and the user may elect to record the buffered PRIME programming information and to continue to buffer the PRIME channel programming or the user may elect to delete the buffered PRIME programming and to stop buffering the PRIME channel programming. At such point, the user may elect to begin buffering an alternate channel made available via one of the tuners of the receiver.

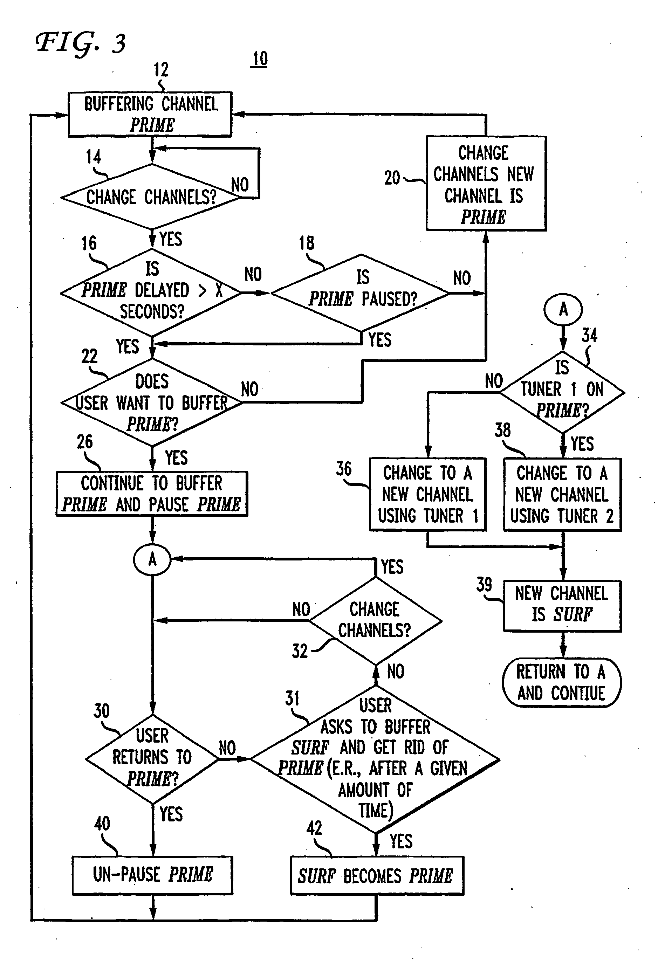

FIG. 3 depicts a block/flow diagram of a method for channel surfing which permits recording of preferred channels without buffer loss in accordance with one embodiment of the present invention. The method 10 of FIG 3 is entered at block 12, where a video recorder, set top box or other receiver, recorder or receiver/recorder combination device begins to receive a preferred current channel. The current channel will be referred to for ease of explanation as a PRIME channel and a surfed channel as SURF. At a given time, the user may wish to switch channels or surf for something different to watch. The receiver is asked to switch to a new channel and the user is able to surf through a plurality of channels in block 14.

Since the user is surfing, the system queries the user as to whether the user wishes to save the paused PRIME buffer. This may be performed automatically provided neither of two conditions met as determined by block 16 and block 18. If either of these conditions is met, the user is prompted to save the buffer of PRIME and change channels to SURF. In the first condition, if the delay as a result of switching channels is greater than a predetermined threshold X in block 16, the decision 16 (PRIME delayed > X seconds) determines if there is enough of PRIME buffered to worry about asking the user if they want to save it. For example, 1 second may not be worth asking the user about, but 1 hour worth of content would be. The user is prompted to save the PRIME buffer in block 22 if the buffered amount exceeds X. Otherwise, if the buffer is below X then a second condition is determined in block 18 as to whether PRIME is paused. When pausing, the buffer continues to fill with content but the start point for returning to the content remain fixed or paused.

If PRIME is paused in block 18, then the user is prompted to buffer PRIME. Otherwise, the channel is changed and the new channel becomes PRIME in block 20 since the previous channel was not paused (e.g., there was no desire by the user to save the content of that channel). If the user wants to buffer PRIME, in block 26, PRIME is paused and buffered. If the SURF channel is not paused, the SURF channel becomes the PRIME channel in block 20 and the path returns to block 12.

The program uses subroutine A to determine an appropriate tuner if available. Subroutine A is employed if two or more tuners are available for viewing channels. In block 34, a check is performed to determine which tuner is tuned to the PRIME channels. If the first tuner (tuner 1) is tuned to the PRIME channel then, in block 38, tuner 2 is employed to change the channel. Otherwise, tuner 1 is employed to change the channel in block 36. New channels are SURF channels as indicted in block 39.

If later, the user returns to PRIME, PRIME may be unpaused in block 30 and viewed on delay and the program path returns to block 12. Otherwise, the user may be prompted to decide or request to buffer SURF and get rid of PRIME in block 31. This might be done in several ways. If the SURF channel is paused (asked to be buffered) and the buffered PRIME discarded in block 31, then SURF becomes PRIME in block 42 and the path returns to block 12. If the user remains on a SURF channel for longer than a given period, 10 minutes, for example, the user might be prompted to discard the PRIME buffer to buffer the current SURF channel. If the user were given options in a menu, the user could choose to discard the PRIME buffer to buffer the current SURF channel. Otherwise, surfing may continue in block 32 or the user can return to watch PRIME. Advantageously, the buffer in PRIME is uninterrupted and complete so that no content is lost despite the fact that the user was changing channels.

## Claims

1. A receiver for permitting channel surfing while buffering a preferred channel, comprising:
at least a first tuner (108) and a second tuner (109) for receiving media content;
a buffer (112) for buffering received media content,
a switch (142) coupled between said buffer and said tuners to selectively connect one of said tuners to said buffer; and
a controller (144) for:
causing first media content received on a first channel using a first tuner to be stored in said buffer;
receiving indication of a request for a channel change from the first channel to a second channel from a user; and
responsive to receiving said request for a channel change, performing the steps of:
determining a value related to the amount of buffered first media content;
comparing said determined value to a threshold;
responsive to a determination that said determined value related to the amount of buffered first media content is below said threshold, causing the first channel tuned by said first tuner to change to the second channel; and
responsive to a determination that said determined value related to the amount of buffered first media content is above said threshold, causing said second channel to be tuned using said second tuner and continuing buffering the first media content received on said first channel such that the buffering of the first channel includes a complete record of received content;
designating, using a first one of said tuners (108,109), a preferred channel of said media content and for enabling channel surfing of other channels of said media content using a second one of said tuners (108,109), wherein said controller (144) selects, using said switch (142), which of the media content from said tuners is to be buffered by said buffer (112).

2. The receiver (101) of claim 1, wherein said controller (144) selects said first preferred channel to be buffered while surfing other channels of said media content using said second one of said tuners.

3. The receiver (101) of claim 1, further comprising a recording device (102) for recording said buffered media content.

4. The receiver (101) of claim 1, further comprising a timer (146) for determining a time period after which a surfed channel viewed for longer than said determined time period is able to be selected for buffering.

5. The receiver (101) of claim 4, wherein after said time period said controller (144) selects said surfed channel viewed for longer than said determined time period to be buffered.

6. The receiver (101) of claim 1, wherein said controller (144) indicates to a user when said buffer (112) is nearing full capacity.

7. The receiver (101) of claim 6, wherein buffered information is recorded by a recording device (102) when said buffer (112) is nearing full capacity.

8. A system (100) for permitting channel surfing while recording a preferred channel, comprising:
a network (140) for providing media content having a plurality of programming channels;
a receiver (101) including;
at least a first tuner (108) and a second tuner (109) for receiving media content;
a buffer (112) for buffering received media content,
a switch (142) coupled between said buffer (112) and said tuners (108, 109) to selectively connect one of said tuners (108, 109) to said buffer (112); and
a controller (144) for:
causing first media content received on a first channel using a first tuner to be stored in
said buffer;
receiving indication of a request for a channel change from the first channel to a second channel from a user; and
responsive to receiving said request for a channel change, performing the steps of:
comparing a value related to the amount of buffered first media content to a threshold;
responsive to a determination that said determined value related to the amount of buffered first media content is below said threshold, causing the first channel tuned by said first tuner to change to the second channel; and
responsive to a determination that said determined value related to the amount of buffered first media content is above said threshold, causing said second channel to be tuned using said second tuner and continuing buffering the first media content received on said first channel such that the buffering of the first channel includes a complete record of received content;
designating, using a first one of said tuners (108,109), a first preferred channel of said media content and for enabling channel surfing of other channels of said media content using a second one of said tuners (108,109), wherein said controller (144) selects, using said switch (142), which of the media content from said tuners (108, 109) is to be buffered by said buffer (112); and
a display (104) for displaying a selected programming channel.

9. The system (100) of claim 8, further comprising a remote control (106) for communicating user selections to said receiver (101).

10. The system (100) of claim 8, wherein said controller (144) designates a preferred channel to be buffered in accordance with a user selection.

11. The system (100) of claim 10, wherein the user selects the preferred channel by pausing a currently viewed channel.

12. The system (100) of claim 8, further comprising a timer (146) for determining a time period after which a surfed channel viewed for longer than said determined time period is able to be selected for buffering.

13. The system (100) of claim 8, wherein said controller (144) selects said first preferred channel to be buffered while surfing other channels of said media content using said second one of said tuners.

14. The system (100) of claim 8, further comprising a recording device (102) for recording said buffered media content.

15. The system (100) of claim 8, further comprising a second buffer (114) such that buffering of content may be performed for each of the first (108) and second (109) tuners.

16. A method for surfing channels while preserving content on a preferred channel, comprising the steps of:
buffering a first channel using a first tuner (108); and
changing viewing channels simultaneously, using a second tuner (109), while buffering the first channel such that the buffering of the first channel includes a complete record of received content
causing first media content received on a first channel using a first tuner to be stored in a buffer;
receiving indication of a request for a channel change from the first channel to a second channel; and responsive to receiving said request for a channel change, performing the steps of:
determining a value related to the amount of buffered first media content;
comparing said determined value to a threshold;
responsive to a determination that said determined value related to the amount of buffered first media content is below said threshold, causing the first channel tuned by said first tuner to change to the second channel; and
responsive to a determination that said determined value related to the amount of buffered first media content is above said threshold, causing said second channel to be tuned using said second tuner and continuing buffering the first media content received on said first channel such that the buffering of the first channel includes a complete record of received content.

17. The method of claim 16, wherein said first channel is buffered upon pausing the first channel prior to changing viewing channels.

18. The method of claim 16, further comprising determining whether to save or discard buffered content of the first channel prior to buffering a new channel.

19. The method of claim 18, wherein the decision to buffer a new channel is prompted by an amount of time elapsing in viewing said new channel.

## Patentansprüche

1. Empfänger, der das Surfen durch Kanäle ermöglicht, während ein bevorzugter Kanal gepuffert wird, umfassend:
mindestens einen ersten Tuner (108) und einen zweiten Tuner (109) zum Empfangen von Medieninhalten,
einen Puffer (112) zum Puffern von empfangenen Medieninhalten,
einen Schalter (142), der zwischen dem Puffer und den Tunern gekoppelt ist, um gezielt einen der Tuner mit dem Puffer zu verbinden, und
eine Steuereinheit (144), um
zu bewirken, dass erste Medieninhalte, die auf einem ersten Kanal unter Verwendung eines ersten Tuners empfangen werden, in dem Puffer gespeichert werden,
die Anzeige einer Aufforderung zum Wechseln des Kanals von dem ersten Kanal zu einem zweiten Kanal von einem Benutzer zu empfangen,
in Reaktion auf den Empfang der Aufforderung zum Wechseln des Kanals folgende Schritte auszuführen:
Festlegen eines Werts, der sich auf den Betrag von gepufferten ersten Medieninhalten bezieht,
Vergleichen des festgelegten Werts mit einem Schwellenwert,
in Reaktion auf eine Feststellung, dass der festgelegte Wert, der sich auf den Betrag von gepufferten ersten Medieninhalten bezieht, unter dem Schwellenwert liegt, Bewirken, dass der erste Kanal unter Verwendung des ersten Tuners eingestellt wird, um zu dem zweiten Kanal zu wechseln, und
in Reaktion auf eine Feststellung, dass der festgelegte Wert, der sich auf den Betrag von gepufferten ersten Medieninhalten bezieht, über dem Schwellenwert liegt, Bewirken, dass der zweite Kanal unter Verwendung des zweiten Tuners eingestellt wird, und weiterhin die ersten Medieninhalte, die auf dem ersten Kanal empfangen werden, derart Puffern, dass das Puffern des ersten Kanals eine vollständige Aufzeichnung der empfangenen Inhalte umfasst,
unter Verwendung eines ersten der Tuner (108, 109) Bestimmen eines bevorzugten Kanals der Medieninhalte und, um das Kanal-Surfen durch andere Kanäle der Medieninhalte zu ermöglichen, Verwenden eines zweiten der Tuner (108, 109), wobei die Steuereinheit (144) unter Verwendung des Schalters (142) auswählt, welcher der von den Tunern kommenden Medieninhalte durch den Puffer (112) gepuffert werden soll.

2. Empfänger (101) nach Anspruch 1, wobei die Steuereinheit (144) den ersten bevorzugten Kanal zum Puffern auswählt, während durch andere Kanäle der Medieninhalte unter Verwendung des zweiten der Tuner gesurft wird.

3. Empfänger (101) nach Anspruch 1, ferner umfassend eine Aufzeichnungsvorrichtung (102) zum Aufzeichnen der gepufferten Medieninhalte.

4. Empfänger (101) nach Anspruch 1, ferner umfassend einen Zeitschalter (146), um eine Zeitspanne festzulegen, nach der ein Kanal, durch den gesurft wird und der länger als die festgelegte Zeitspanne angeschaut worden ist, zum Puffern ausgewählt werden kann.

5. Empfänger (101) nach Anspruch 4, wobei nach der Zeitspanne die Steuereinheit (144) den Kanal, durch den gesurft wird und der länger als die festgelegte Zeitspanne angeschaut worden ist, zum Puffern auswählt.

6. Empfänger (101) nach Anspruch 1, wobei die Steuereinheit (144) einem Benutzer anzeigt, wenn der Puffer (112) fast die volle Kapazität erreicht hat.

7. Empfänger (101) nach Anspruch 6, wobei gepufferte Informationen durch eine Aufzeichnungsvorrichtung (102) aufgezeichnet werden, wenn der Puffer (112) fast die volle Kapazität erreicht hat.

8. System (100), welches das Surfen durch Kanäle ermöglicht, während ein bevorzugter Kanal aufgezeichnet wird, umfassend:
ein Netzwerk (140) zum Bereitstellen von Medieninhalten, das eine Vielzahl von Programmierkanälen aufweist,
einen Empfänger (101), umfassend:
mindestens einen ersten Tuner (108) und einen zweiten Tuner (109) zum Empfangen von Medieninhalten,
einen Puffer (112) zum Puffern von empfangenen Medieninhalten,
einen Schalter (142), der zwischen dem Puffer (112) und den Tunern (108, 109) gekoppelt ist, um gezielt einen der Tuner (108, 109) mit dem Puffer (112) zu verbinden, und eine Steuereinheit (144), um
zu bewirken, dass erste Medieninhalte, die auf einem ersten Kanal unter Verwendung eines ersten Tuners empfangen werden, in dem Puffer gespeichert werden, die Anzeige einer Aufforderung zum Wechseln des Kanals von dem ersten Kanal zu einem zweiten Kanal von einem Benutzer zu empfangen, und
in Reaktion auf den Empfang der Aufforderung zum Wechseln des Kanals folgende Schritte auszuführen:
Vergleichen eines Werts, der sich auf den Betrag von gepufferten ersten Medieninhalten bezieht, mit einem Schwellenwert,
in Reaktion auf eine Feststellung, dass der festgelegte Wert, der sich auf den Betrag von gepufferten ersten Medieninhalten bezieht, unter dem Schwellenwert liegt, Bewirken, dass der erste Kanal unter Verwendung des ersten Tuners eingestellt wird, um zu dem zweiten Kanal zu wechseln, und
in Reaktion auf eine Feststellung, dass der festgelegte Wert, der sich auf den Betrag von gepufferten ersten Medieninhalten bezieht, über dem Schwellenwert liegt, Bewirken, dass der zweite Kanal unter Verwendung des zweiten Tuners eingestellt wird, und weiterhin die ersten Medieninhalte, die auf dem ersten Kanal empfangen werden, derart-Puffern, dass das Puffern des ersten Kanals eine vollständige Aufzeichnung der empfangenen Inhalte umfasst,
unter Verwendung eines ersten der Tuner (108, 109) Bestimmen eines bevorzugten Kanals der Medieninhalte und, um das Kanal-Surfen durch andere Kanäle der Medieninhalte zu ermöglichen, Verwenden eines zweiten der Tuner (108, 109), wobei die Steuereinheit (144) unter Verwendung des Schalters (142) auswählt, welcher der von den Tunern (108, 109) kommenden Medieninhalte durch den Puffer (112) gepuffert werden soll, und
eine Anzeige (104) zum Anzeigen eines ausgewählten Programmierkanals.

9. System (100) nach Anspruch 8, ferner umfassend eine Fernsteuerung (106), um Benutzerauswahlen zu dem Empfänger (101) zu übertragen.

10. System (100) nach Anspruch 8, wobei die Steuereinheit (144) einen bevorzugten Kanal bestimmt, der in Übereinstimmung mit einer Benutzerauswahl gepuffert werden soll.

11. System (100) nach Anspruch 10, wobei der Benutzer den bevorzugten Kanal auswählt, indem er einen aktuell angeschauten Kanal pausiert.

12. System (100) nach Anspruch 8, ferner umfassend einen Zeitschalter (146), um eine Zeitspanne festzulegen, nach der ein Kanal, durch den gesurft wird und der länger als die festgelegte Zeitspanne angeschaut worden ist, zum Puffern ausgewählt werden kann.

13. System (100) nach Anspruch 8, wobei die Steuereinheit (144) den ersten bevorzugten Kanal zum Puffern auswählt, während durch andere Kanäle der Medieninhalte unter Verwendung des zweiten der Tuner gesurft wird.

14. System (100) nach Anspruch 8, ferner umfassend eine Aufzeichnungsvorrichtung (102) zum Aufzeichnen der gepufferten Medieninhalte.

15. System (100) nach Anspruch 8, ferner umfassend einen zweiten Puffer (114) derart, dass ein Puffern von Inhalten für jeweils den ersten (108) und den zweiten (109) Tuner durchgeführt werden kann.

16. Verfahren zum Surfen durch Kanäle, während Inhalte auf einem bevorzugten Kanal erhalten bleiben, folgende Schritte umfassend:
Puffern eines ersten Kanals unter Verwendung eines ersten Tuners (108) und
gleichzeitiges Ändern der Ansichtskanäle unter Verwendung eines zweiten Tuners (109), während der erste Kanal derart gepuffert wird, dass das Puffern des ersten Kanals eine vollständige Aufzeichnung der empfangenen Inhalte umfasst,
Bewirken, dass erste Medieninhalte, die unter Verwendung eines ersten Tuners empfangen werden, in einem Puffer gespeichert werden,
Empfangen der Anzeige einer Aufforderung zum Wechseln des Kanals von dem ersten Kanal zu einem zweiten Kanal, und in Reaktion auf den Empfang der Aufforderung zum Wechseln des Kanals Ausführen folgender Schritte:
Festlegen eines Werts, der sich auf den Betrag von gepufferten ersten Medieninhalten bezieht, Vergleichen des festgelegten Werts mit einem Schwellenwert,
in Reaktion auf eine Feststellung, dass der festgelegte Wert, der sich auf den Betrag von gepufferten ersten Medieninhalten bezieht, unter dem Schwellenwert liegt, Bewirken, dass der erste Kanal unter Verwendung des ersten Tuners eingestellt wird, um zu dem zweiten Kanal zu wechseln, und
in Reaktion auf eine Feststellung, dass der festgelegte Wert, der sich auf den Betrag von gepufferten ersten Medieninhalten bezieht, über dem Schwellenwert liegt, Bewirken, dass der zweite Kanal unter Verwendung des zweiten Tuners eingestellt wird, und weiterhin die ersten Medieninhalte, die auf dem ersten Kanal empfangen werden, derart Puffern, dass das Puffern des ersten Kanals eine vollständige Aufzeichnung der empfangenen Inhalte umfasst.

17. Verfahren nach Anspruch 16, wobei der erste Kanal gepuffert wird, wenn der erste Kanal vor dem Wechsel der Ansichtskanäle pausiert wird.

18. Verfahren nach Anspruch 16, ferner umfassend den Schritt des Festlegens, ob gepufferte Inhalte des ersten Kanals vor dem Puffern eines neuen Kanals gespeichert oder verworfen werden sollen.

19. Verfahren nach Anspruch 18, wobei die Entscheidung über das Puffern eines neuen Kanals durch einen Betrag der Zeit veranlasst wird, die bei dem Anschauen des neuen Kanals verstreicht.

## Revendications

1. Un récepteur permettant de naviguer sur des canaux tout en mettant en mémoire-tampon un canal préféré, comprenant :
au moins un premier syntoniseur (108) et un deuxième syntoniseur (109) permettant de recevoir le contenu médiatique ;
une mémoire-tampon (112) permettant de mettre en mémoire-tampon le contenu médiatique reçu,
un commutateur (142) couplé entre ladite mémoire-tampon et lesdits syntoniseurs afin de connecter de façon sélective un desdits syntoniseurs à ladite mémoire-tampon, et
un contrôleur (144) pour :
permettre à un premier contenu médiatique reçu sur un premier canal d'utiliser un premier syntoniseur afin d'être stocké dans ledit tampon ;
recevoir une indication de requête, en provenance d'un utilisateur, de changement de canal du premier canal à un deuxième canal ; et
en réponse à la réception de ladite requête de changement de canal, exécuter les étapes de :
détermination d'une valeur associée à la quantité du premier contenu médiatique mis en mémoire-tampon ;
comparaison de ladite valeur déterminée avec un seuil ;
en réponse à une détermination que ladite valeur déterminée associée à la quantité du premier contenu médiatique mis en mémoire-tampon est inférieure audit seuil, le premier canal syntonisé par le dit premier syntoniseur à passer au deuxième canal ; et
en réponse à une détermination selon laquelle ladite valeur déterminée associée à la quantité du premier contenu médiatique mis en mémoire-tampon est supérieure audit seuil, le deuxième canal est syntonisé à l'aide du deuxième syntoniseur et la poursuite de la mise en mémoire-tampon du premier contenu médiatique reçu sur ledit premier canal, de telle sorte que la mise en mémoire-tampon du premier canal
comprend un enregistrement complet du contenu reçu ;
désignation, à l'aide d'un premier desdits syntoniseurs (108, 109), d'un canal préféré dudit contenu médiatique, et, pour permettre audit contenu médiatique de naviguer dans d'autres canaux à l'aide d'un deuxième desdits syntoniseurs (108, 109), où ledit contrôleur (144) sélectionne, à l'aide dudit commutateur (142), le contenu médiatique des syntoniseurs qui sera mis en mémoire-tampon par ladite mémoire-tampon (112).

2. Le récepteur (101) de la revendication 1, dans lequel ledit contrôleur (144) sélectionne ledit premier canal préféré à mettre en mémoire-tampon tout en naviguant sur d'autres canaux dudit contenu médiatique à l'aide dudit second syntoniseur desdits syntoniseurs.

3. Le récepteur (101) de la revendication 1, comprenant en outre un dispositif d'enregistrement (102) pour enregistrer ledit contenu médiatique mis en mémoire-tampon.

4. Le récepteur (101) de la revendication 1, comprenant en outre un minuteur (146) permettant de déterminer une période après laquelle un canal de navigation consulté pendant une durée supérieure à ladite période déterminée peut être sélectionné pour mise en mémoire-tampon.

5. Le récepteur (101) de la revendication 4, dans lequel après ladite période ledit contrôleur (144) sélectionne ledit canal navigué plus longuement que ladite durée déterminée pour mise en mémoire-tampon.

6. Le récepteur (101) de la revendication 1, dans lequel ledit contrôleur (144) indique à un utilisateur le moment où ladite mémoire-tampon (112) est presque pleine.

7. Le récepteur (101) de la revendication 6, dans lequel lesdites informations mises en mémoire-tampon sont enregistrées par un dispositif d'enregistrement (102) lorsque ladite mémoire-tampon (112) est presque pleine.

8. Un système (100) permettant de naviguer sur des canaux tout en enregistrant un canal préféré, comprenant :
un réseau (140) permettant de fournir un contenu médiatique disposant d'une pluralité de canaux de programmation ;
un récepteur (101) comprenant :
au moins un premier syntoniseur (108) et un deuxième syntoniseur (109) pour recevoir le contenu médiatique ;
un tampon (112) afin de mettre en mémoire-tampon le contenu médiatique reçu,
un commutateur (142) couplé entre ladite mémoire-tampon (112) et lesdits syntoniseurs (108, 109) afin de connecter de façon sélective un desdits syntoniseurs (108, 109) audit tampon (112), et
un contrôleur (144) pour :
permettre à un premier contenu médiatique reçu sur un premier canal à l'aide d'un premier syntoniseur d'être stocké dans ladite mémoire-tampon ;
recevoir une indication de requête, en provenance d'un utilisateur, de changement de canal du premier canal à un deuxième canal ; et
en réponse à la réception de ladite requête de changement de canal, exécuter les étapes de :
comparaison d'une valeur associée à la quantité du premier contenu médiatique mis en mémoire-tampon avec un seuil ;
en réponse à une détermination que ladite valeur déterminée associée à la quantité du premier contenu médiatique mis en mémoire-tampon est inférieure audit seuil, le premier canal syntonisé par le dit premier syntoniseur à passer au deuxième canal ; et
en réponse à une détermination que ladite valeur déterminée associée à la quantité du premier contenu médiatique en mémoire-tampon est supérieure audit seuil, le deuxième canal est syntonisé à l'aide du deuxième syntoniseur et la mise en mémoire-tampon du premier contenu médiatique reçu sur ledit premier canal, de telle sorte que la mise en mémoire-tampon du premier canal comprend un enregistrement complet du contenu reçu ;
désignation, à l'aide d'un premier desdits syntoniseurs (108, 109), d'un premier canal préféré dudit contenu médiatique et, la navigation d'autres canaux dudit contenu médiatique à l'aide d'un deuxième desdits syntoniseurs (108, 109), où ledit contrôleur (144) sélectionne, à l'aide dudit commutateur (142), le contenu médiatique desdits syntoniseurs (108, 109) à mettre en mémoire-tampon par ladite mémoire-tampon (112) ;
et
un écran (104) pour l'affichage d'un canal de programmation sélectionné.

9. Le système (100) de la revendication 8, comprenant en outre une commande à distance (106) pour communiquer lesdites sélections de l'utilisateur audit récepteur (101).

10. Le système (100) de la revendication 8, dans lequel ledit contrôleur (144) désigne un canal préféré qui sera mis en mémoire-tampon selon une sélection de l'utilisateur.

11. Le système (100) de la revendication 10, dans lequel l'utilisateur sélectionne le canal préféré en mettant en pause un canal en cours de consultation.

12. Le système (100) de la revendication 8, comprenant en outre un minuteur (146) permettant de déterminer une période après laquelle un canal qui a été consulté pendant une durée supérieure à ladite période déterminée, peut être sélectionné pour mise en mémoire-tampon.

13. Le système (100) de la revendication 8, dans lequel ledit contrôleur (144) sélectionne ledit premier canal préféré à mettre en mémoire-tampon tout en naviguant sur d'autres canaux dudit contenu médiatique à l'aide dudit deuxième syntoniseur desdits syntoniseurs.

14. Le système (100) de la revendication 8, comprenant en outre un dispositif d'enregistrement (102) pour enregistrer ledit contenu médiatique mis en mémoire-tampon.

15. Le système (100) de la revendication 8, comprenant en outre une deuxième mémoire-tampon (114) de façon à ce que la mise en mémoire-tampon du contenu puisse être effectuée pour chacun des premier (108) et deuxième (109) syntoniseurs.

16. Un procédé pour naviguer sur des canaux tout en préservant le contenu sur un canal préféré, comprenant les étapes de :
mise en mémoire d'un premier canal à l'aide d'un premier syntoniseur (108) ; et
modification des canaux de consultation simultanément, à l'aide d'un deuxième syntoniseur (109), tout en mettant en mémoire-tampon la premier canal de telle sorte que la mise en mémoire-tampon du premier canal comprenne un enregistrement complet du contenu reçu,
ce qui permet à un premier contenu médiatique reçu sur un premier canal à l'aide d'un premier syntoniseur d'être stocké dans une mémoire-tampon ; réception d'une indication de requête pour un changement de canal du premier canal à un deuxième canal et, en réponse à la réception de ladite requête de changement de canal, exécution des étapes de :
détermination d'une valeur associée à la quantité du premier contenu médiatique mis en mémoire-tampon ;
comparaison de ladite valeur déterminée avec un seuil ;
en réponse à une détermination que ladite valeur déterminée associée à la quantité du premier contenu médiatique mis en mémoire-tampon est inférieure audit seuil, le premier canal syntonisé par le dit premier syntoniseur à passer au deuxième canal ; et
en réponse à une détermination que ladite valeur déterminée associée à la quantité du premier contenu médiatique en mémoire-tampon est supérieure audit seuil, la syntonisation dudit deuxième canal à l'aide dudit deuxième syntoniseur et poursuite de la mise en mémoire-tampon du premier contenu médiatique reçu sur ledit premier canal, de telle sorte que la mise en mémoire-tampon du premier canal comprend un enregistrement complet du contenu reçu.

17. Le procédé de la revendication 16, dans lequel ledit premier canal est mis en mémoire-tampon suite à la mise en pause du premier canal avant de changer les canaux de consultation.

18. Le procédé de la revendication 16, comprenant en outre la détermination de sauvegarde ou de suppression du contenu mis en mémoire-tampon du premier canal avant la mise en mémoire-tampon d'un nouveau canal.

19. Le procédé de la revendication 18, dans lequel la décision de mettre en mémoire-tampon un nouveau canal est provoquée par une période passée à consulter ledit nouveau canal.
